# EUROPÄISCHE PATENTANMELDUNG

(11) **EP 4 310 741 A1**
(43) Veröffentlichungstag der Anmeldung: **24.01.2024**
(21) Anmeldenummer: 22185392.2
(22) Anmeldetag: 18.07.2022
(51) Int. Cl.: G06Q 10/02, G06Q 10/04, G06Q 10/06, G06Q 50/06

(54) **VORRICHTUNG UND VERFAHREN FÜR EINE OPTIMIERTE PLATZZUWEISUNG FÜR EINEN INNENRAUM**

(71) Anmelder: Siemens Aktiengesellschaft, 80333 München (DE)
(72) Erfinder: Baudisch, Thomas, 86938 Schondorf am Ammersee (DE)
(74) Vertreter: Siemens Patent Attorneys

(57) **Zusammenfassung**

Die Erfindung betrifft eine Vorrichtung (100) zur Ermittlung einer optimierten Platzzuweisung (PZopt) für Personen in Bereichen eines Innenraums, umfassend:
a) ein Eingabemodul (101), das derart eingerichtet ist, folgende Informationen einzulesen:
- Raumdaten (RD), die dem Innenraum zugeordnet sind,
- eine Belegungsinformation (BI) einer Personenbelegung in Bereichen des Innenraums, und
- eine Temperaturinformation (TI) und/oder eine Helligkeitsinformation (HI), die jeweils dem Innenraum zugeordnet sind,

b) ein Optimierungsmodul (102), das derart eingerichtet ist, iterativ die optimierte Platzzuweisung (PZopt) in Bereichen des Innenraums derart zu ermitteln, dass ein Energieverbrauch für den Innenraum optimiert wird, wobei iterativ
- in Abhängigkeit der Raumdaten (RD), der Belegungsinformation (BI) und der Temperaturinformation (TI) eine Temperaturverteilung (D1) und/oder in Abhängigkeit der Raumdaten (RD), der Belegungsinformation (BI) und der Helligkeitsinformation (HI) eine Helligkeitsverteilung (D2) im Innenraum computergestützt simuliert wird,
- in Abhängigkeit der simulierten Temperatur- und/oder der Helligkeitsverteilung (D1, D2) ein Energieverbrauch (EV) für den Innenraum berechnet wird,
- die Platzzuweisung für Personen in mindestens einem Bereich des Innenraums derart modifiziert wird, bis der berechnete Energieverbrauch (EV) einen vorgegebenen Zielwert unterschreitet, und

c) ein Ausgabemodul (103), das derart eingerichtet ist, die optimierte Platzzuweisung (PZopt) für Personen für die Bereiche des Innenraums auszugeben.

## Beschreibung

Die Erfindung betrifft eine Vorrichtung und ein computerimplementiertes Verfahren zur Ermittlung einer optimierten Platzzuweisung für Personen in Bereichen eines Innenraums, wobei ein Energieverbrauch für den Innenraum optimiert wird, sowie ein Computerprogrammprodukt.

Nachhaltigkeit, Energieeinsparung aber auch Gesundheitsschutz gewinnen bei einer Personenbelegung eines Raums, wie z.B. eines Büroraums, immer mehr an Bedeutung. Allerdings werden diese Faktoren bei einer Belegungsplanung, wie z.B. von geteilten Arbeitsplätzen, derzeit oft nicht berücksichtigt. Insbesondere erfolgt eine Platzzuweisung oft lediglich durch die platzsuchende Person selbst und wird nicht anhand von beispielsweise Energieeffizienzkriterien ermittelt und umgesetzt. Dies ist auch für einzelne Personen oft schwer einfach zu ermitteln. Die Folgen einer solchen ineffizienten Belegung können beispielsweise zu hohe Energiekosten für Innenräume sein.

Es ist daher eine Aufgabe der Erfindung, eine Möglichkeit zu schaffen, eine Personenbelegung in Innenräumen energieoptimiert zu realisieren.

Die Aufgabe wird durch die in den unabhängigen Ansprüchen beschriebenen Maßnahmen gelöst. In den abhängigen Ansprüchen sind vorteilhafte Weiterbildungen der Erfindung dargestellt.

Gemäß einem ersten Aspekt betrifft die Erfindung eine Vorrichtung zur Ermittlung einer optimierten Platzzuweisung für Personen in Bereichen eines Innenraums, umfassend:
a) ein Eingabemodul, das derart eingerichtet ist, folgende Informationen einzulesen:
   - Raumdaten, die dem Innenraum zugeordnet sind,
   - eine Belegungsinformation einer Personenbelegung in Bereichen des Innenraums,
      und
   - eine Temperaturinformation und/oder eine Helligkeitsinformation, die jeweils dem Innenraum zugeordnet sind,
b) ein Optimierungsmodul, das derart eingerichtet ist, iterativ die optimierte Platzzuweisung in Bereichen des Innenraums derart zu ermitteln, dass ein Energieverbrauch für den Innenraum optimiert wird, wobei iterativ
   - in Abhängigkeit der Raumdaten, der Belegungsinformation und der Temperaturinformation eine Temperaturverteilung und/oder in Abhängigkeit der Raumdaten, der Belegungsinformation und der Helligkeitsinformation eine Helligkeitsverteilung im Innenraum computergestützt simuliert wird,
   - in Abhängigkeit der simulierten Temperatur- und/oder der Helligkeitsverteilung ein Energieverbrauch für den Innenraum berechnet wird,
   - die Platzzuweisung für Personen in mindestens einem Bereich des Innenraums derart modifiziert wird, bis der berechnete Energieverbrauch einen vorgegebenen Zielwert unterschreitet,
   und
c) ein Ausgabemodul, das derart eingerichtet ist, die optimierte Platzzuweisung für Personen für die Bereiche des Innenraums auszugeben.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Die Vorrichtung kann insbesondere mindestens einen Prozessor umfassen. Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einem "Innenraum" kann insbesondere ein Raum oder Bereich eines Gebäudes verstanden werden. Beispielsweise handelt es sich bei dem Innenraum um einen Büroraum. Auch kann ein "Innenraum" ein Raum in einem Fahrzeug, wie z.B. ein Zugabteil, oder eines Flugzeugs sein.

Unter einer "Belegungsinformation einer Personenbelegung in Bereichen des Innenraums" kann insbesondere eine Platzbelegung von bereits anwesenden Personen verstanden werden. In anderen Worten, bei einer Belegungsinformation kann es sich um die Anzahl und/oder den Ort der bereits im Innenraum befindlichen Personen sowie insbesondere deren Verteilung handeln. Außerdem kann eine Belegungsinformation Information über eine Platzbuchung/Platzreservierung umfassen. Außerdem kann die Belegungsinformation eine Anzahl an belegten Bereichen bzw. Plätzen des Innenraums und somit indirekt eine Information über eine Personenanzahl im Innenraum umfassen.

Unter einer "Helligkeitsinformation" kann beispielsweise eine, durch einen Helligkeitssensor erfasste Helligkeit im Innenraum und/oder außerhalb des Innenraums verstanden werden. Beispielsweise kann die Helligkeitsinformation Informationen zur Sonnenscheindauer, zum Sonnenstand und/oder zu künstlichen Lichtquellen, die den Raum beleuchten, umfassen. Außerdem kann die Helligkeitsinformation Information zu Sonnenschutz, wie z.B. Jalousien, des Innenraums umfassen.

Es ist ein Vorteil der vorliegenden Erfindung, dass Plätze, wie z.B. Arbeitsplätze oder Sitzplätze, für Personen in einem Innenraum energieoptimiert zugewiesen können. Dazu werden durch Personen zu belegende Bereiche des Innenraums, wie z.B. Sitzplätze, derart bestimmt, dass ein Energieverbrauch für den Innenraum optimiert wird. Beispielsweise können somit Arbeitsplätze in einem Büroraum jeweiligen Mitarbeitern zugewiesen werden, so dass Energiekosten für Beleuchtung, Heizung und/oder Kühlung minimiert werden.

In einer Ausführungsform können die Raumdaten mindestens eine der folgenden Informationen umfassen:
- Raumgrößen des Innenraums,
- Grundriss des Innenraums,
- Ortsangaben von Wärmequellen,
- Information zur Raumdämmung des Innenraums,
- Information zu Raumöffnungen des Innenraums,
   und/oder
- Ortsinformation des Innenraums.

In einer Ausführungsform können die Raumdaten als ein digitales Gebäudemodell des Innenraums vorliegen. Beispielsweise kann das digitale Gebäudemodell ein BIM-Modell (Building Information Modeling; BIM) sein.

In einer Ausführungsform kann die Temperaturinformation mindestens eine der folgenden Informationen umfasst:
- Informationen zu internen und/oder externen Wärmequellen,
- eine Temperaturmodellvorhersage für einen Ort des Innenraums,
   und/oder
- Informationen zur Energieaufnahme des Innenraums.

In einer Ausführungsform kann das Eingabemodul weiter eingerichtet sein, Sensordaten von Temperatursensoren des Innenraums einzulesen. Außerdem kann das Optimierungsmodul weiter eingerichtet sein, diese Sensordaten bei der computergestützten Simulation der Temperaturverteilung zu berücksichtigen.

Dadurch können aktuelle Temperaturdaten bei der Optimierung berücksichtigt werden.

In einer Ausführungsform kann das Eingabemodul weiter eingerichtet sein, Sensordaten von Helligkeitssensoren des Innenraums einzulesen., Außerdem kann das Optimierungsmodul weiter eingerichtet sein, diese Sensordaten bei der computergestützten Simulation der Helligkeitsverteilung zu berücksichtigen.

In einer Ausführungsform kann das Optimierungsmodul eingerichtet sein, in Abhängigkeit der Raumdaten und der Belegungsinformation eine Raumakustik für den Innenraum computergestützt zu simulieren und die Platzzuweisung für Personen in mindestens einem Bereich des Innenraums derart zu modifizieren, dass die Raumakustik im Innenraum optimiert wird.

Dies dient insbesondere dem Gesundheitsschutz von Personen. So kann beispielsweise ein Lärmpegel in einem Büroraum oder in einem Zugabteil durch die Belegung gesteuert werden.

In einer Ausführungsform kann das Optimierungsmodul eingerichtet sein, mindestens einer der folgenden Randbedingungen bei der Ermittlung der optimierten Platzzuweisung zu berücksichtigen:
- Abstandsvorgaben für eine Personenbelegung,
   und/oder
- Priorisierung bei einer Belegung von Bereichen des Innenraums.

In einer Ausführungsform kann das Optimierungsmodul eingerichtet sein, die optimierte Platzzuweisung neu zu ermitteln, sobald eine Personenanzahl im Innenraum einen vorgegebenen Grenzwert über- oder unterschreitet.

Insbesondere kann die Platzzuweisung erneut ermittelt werden, sobald mindestens eine weitere Person den Innenraum betritt oder betreten möchte.

In einer Ausführungsform kann das Ausgabemodul als ein, im Innenraum installiertes Anzeigesystem zum Anzeigen der optimierten Platzzuweisung realisiert sein.

Beispielsweise kann es sich hierbei um ein farb- oder helligkeitskodiertes Anzeigesystem, wie z.B. Lampen und/oder Anzeigetafeln, handeln, das beispielsweise in den Bereichen, wie z.B. über oder an Arbeitsplätzen, angebracht ist.

In einer alternativen Ausführungsform kann das Ausgabemodul als eine Softwareapplikation für ein mobiles Gerät zum Anzeigen der optimierten Platzzuweisung realisiert sein.

Gemäß einem zweiten Aspekt betrifft die Erfindung ein computerimplementiertes Verfahren zur Ermittlung einer optimierten Platzzuweisung für Personen in Bereichen eines Innenraums, mit den Verfahrensschritten:
a) Einlesen von Raumdaten, die dem Innenraum zugeordnet sind, einer Belegungsinformation einer Personenbelegung in Bereichen des Innenraums, und einer Temperaturinformation und/oder einer Helligkeitsinformation, die jeweils dem Innenraum zugeordnet sind, einzulesen,
b) iteratives Ermitteln der optimierten Platzzuweisung in Bereichen des Innenraums, derart, dass ein Energieverbrauch für den Innenraum optimiert wird, wobei iterativ
   - in Abhängigkeit der Raumdaten, der Belegungsinformation und der Temperaturinformation eine Temperaturverteilung und/oder in Abhängigkeit der Raumdaten, der Belegungsinformation und der Helligkeitsinformation eine Helligkeitsverteilung im Innenraum computergestützt simuliert wird,
   - in Abhängigkeit der simulierten Temperatur- und/oder Helligkeitsverteilung ein Energieverbrauch für den Innenraum berechnet wird,
   - die Platzzuweisung für Personen in mindestens einem Bereich des Innenraums derart modifiziert wird, bis der berechnete Energieverbrauch einen vorgegebenen Zielwert unterschreitet,
   und
c) Ausgeben der optimierten Platzzuweisung für die Bereiche des Innenraums.

Des Weiteren betrifft die Erfindung ein Computerprogrammprodukt, das direkt in einen programmierbaren Computer ladbar ist, umfassend Programmcodeteile, die bei der Ausführung des Programms durch einen Computer diesen veranlassen, die Schritte eines erfindungsgemäßen Verfahrens auszuführen.

Ein Computerprogrammprodukt kann beispielsweise auf einem Speichermedium, wie z.B. Speicherkarte, USB-Stick, CD-ROM, DVD, ein nichtflüchtiger/dauerhaftes Speichermedium (engl. Non-transitory storage Medium) oder auch in Form einer herunterladbaren Datei von einem Server in einem Netzwerk bereitgestellt oder geliefert werden.

Ausführungsbeispiele der Erfindung sind in den Zeichnungen beispielhaft dargestellt und werden anhand der nachfolgenden Beschreibung näher erläutert. Es zeigen:
- Fig. 1:: ein Ausführungsbeispiel einer Vorrichtung zur Ermittlung einer optimierten Platzzuweisung für Personen in Bereichen eines Innenraums; und
- Fig. 2:: ein Ausführungsbeispiel eines computerimplementierten Verfahrens zur Ermittlung einer optimierten Platzzuweisung für Personen in Bereichen eines Innenraums.

Einander entsprechende Teile sind in allen Figuren mit den gleichen Bezugszeichen versehen.

Insbesondere zeigen die nachfolgenden Ausführungsbeispiele lediglich beispielhafte Realisierungsmöglichkeiten, wie insbesondere solche Realisierungen der erfindungsgemäßen Lehre aussehen könnten, da es unmöglich und auch für das Verständnis der Erfindung nicht zielführend oder notwendig ist, all diese Realisierungsmöglichkeiten zu benennen.

Auch sind insbesondere einem (einschlägigen) Fachmann in Kenntnis des/der Verfahrensanspruchs/Verfahrensansprüche alle im Stand der Technik üblichen Möglichkeiten zur Realisierung der Erfindung selbstverständlich bekannt, sodass es insbesondere einer eigenständigen Offenbarung in der Beschreibung nicht bedarf.

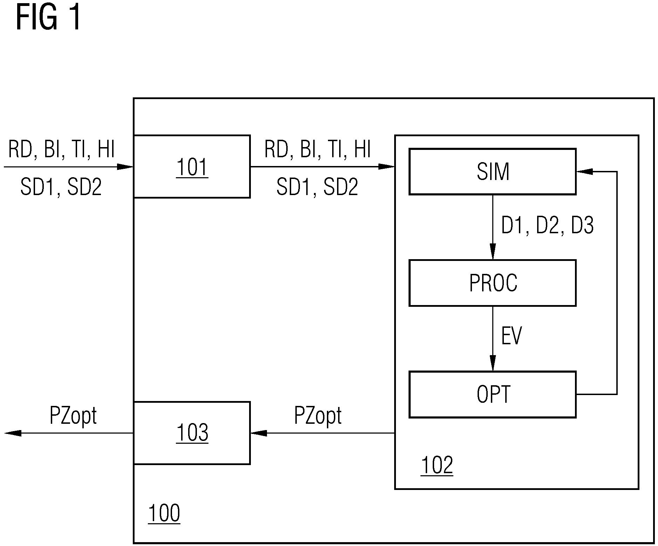

Figur 1 zeigt eine Vorrichtung 100 zur Ermittlung einer optimierten Platzzuweisung für Personen in Bereichen eines Innenraums. Beispielsweise handelt es sich bei dem Innenraum um einen Büroraum mit einer Vielzahl von Arbeitsplätzen. Die Vorrichtung 100 ist derart eingerichtet, eine Platzzuweisung von Bereichen, z.B. der Arbeitsplätze, an Personen derart zu realisieren, dass ein Energieverbrauch für den Innenraum optimiert wird. Insbesondere kann die Vorrichtung 100 auch derart eingerichtet sein, die optimierte Platzzuweisung zu steuern.

Die Vorrichtung 100 umfasst ein Eingabemodul 101, ein Optimierungsmodul 102 und ein Ausgabemodul 103.

Das Eingabemodul 101 ist derart eingerichtet, folgende Informationen einzulesen:
- Raumdaten RD, die dem Innenraum zugeordnet sind,
- eine Belegungsinformation BI einer Personenbelegung in Bereichen des Innnenraums, wie z.B. bereits anwesende Personen und/oder bereits belegte und/oder gebuchte/reservierte (Arbeits-)Plätze,
   und/oder
- eine Temperaturinformation TI und/oder eine Helligkeitsinformation HI, wobei diese jeweils dem Innenraum zugeordnet sind.

Die Raumdaten RD können beispielsweise Raumgrößen des Innenraums, einen Grundriss des Innenraums, Ortsangaben von Wärmequellen, Information zur Raumdämmung des Innenraums, Information zu Raumöffnungen des Innenraums (z.B. Türen, Fenster) und/oder eine Ortsinformation des Innenraums (z.B. GPS-Koordinaten) umfassen. Insbesondere können die Raumdaten RD als digitales Gebäudemodell oder BIM-Modell vorliegen bzw. aus einem BIM-Modell des Gebäudes, in dem sich der Innenraum befindet, extrahiert werden.

Die Temperaturinformation TI kann beispielsweise mindestens eine der folgenden Informationen umfassen:
- Information zu internen und/oder externen Wärmequellen, wie z.B. Wirkungsgrad einer installierten Heizung,
- eine Temperaturmodellvorhersage für einen Ort des Innenraums, wie z.B. ein Wettermodell für den Ort des Innenraums für einen vorgegebenen Zeitraum,
   und/oder
- Informationen zur Energieaufnahme des Innenraums.

Außerdem kann die Temperaturinformation TI auch beispielsweise eine, durch einen Temperatursensor gemessene Raumtemperatur, eine aktuelle oder prognostizierte Wetterinformation und/oder eine Klimainformation für einen Standort des Innenraums verstanden werden. Insbesondere kann die Temperaturinformation TI eine Temperaturkurve umfassen, so dass eine zeitabhängige Temperaturinformation vorliegt. Außerdem kann die Temperaturinformation Information zu einer Energie-/Temperaturaufnahme des Innenraums, d.h. beispielsweise Informationen über eine Dämmung, umfassen. Ebenso kann die Temperaturinformation Informationen über Temperaturregler, wie Heizkörper und/oder Klimaanlagen, eine Thermostatinformation, eine Temperatur eines Heizkörpers oder einer Klimaanlage, umfassen.

Es ist auch möglich, dass anhand der Belegungsinformation BI eine Temperaturinformation TI ermittelt und bereitgestellt wird, wobei anwesende Personen als Wärmequellen verstanden werden können.

Das Eingabemodul ist vorzugsweise weiter eingerichtet, Sensordaten SD1 von Temperatursensoren und/oder Sensordaten SD2 von Helligkeitssensoren, die jeweils im und/oder am Innenraum angeordnet sind, einzulesen. Somit können aktuelle Temperatur- bzw. Helligkeitswerte berücksichtigt werden.

Die Raumdaten RD, Belegungsinformation BI, Temperaturinformation TI, Helligkeitsinformation HI, und/oder die Sensordaten SD1, SD2 werden dem Optimierungsmodul 102 übermittelt.

Vorzugsweise werden die Temperaturinformation TI, die Belegungsinformation BI und/oder die Helligkeitsinformation HI für einen vorgegebenen Zeitpunkt und/oder Zeitraum bereitgestellt und derart eingelesen. Somit kann insbesondere für diesen Zeitpunkt/Zeitraum eine optimierte Platzzuweisung ermittelt werden.

Das Optimierungsmodul 102 ist derart eingerichtet, iterativ eine Platzzuweisung von Personen zu Plätzen/Bereichen des Innenraums durchzuführen, so dass ein Energieverbrauch für den Innenraum optimiert wird. Beispielsweise kann das Optimierungsmodul 102 im Sommer Büroarbeitsplätze zunächst in einem sonnenabgewandten Bereich des Büroraums ermitteln. Dies führt beispielsweise zur Reduktion der Energiekosten für eine Klimatisierung. Zusätzlich oder alternativ können auch zunächst Plätze besetzt werden, bei denen Tageslicht früher einfällt, um Stromkosten für die Beleuchtung einzusparen. Generell können Arbeitsplätze in einem Bereich konzentriert werden, um dort eine hellere Beleuchtung und an unbesetzten Bereichen eine gedimmte Beleuchtung einzustellen. Außerdem können Bereiche eines Innenraums oder eines Gebäudes sukzessive besetzt werden.

Dazu umfasst das Optimierungsmodul 102 vorzugweise einen Simulator SIM und einen Optimierer OPT sowie eine Recheneinheit PROC. Das Optimierungsmodul 102 ist dazu eingerichtet, iterativ in Abhängigkeit der Raumdaten RD, der Belegungsinformation BI und der Temperaturinformation TI eine Temperaturverteilung D1 und/oder in Abhängigkeit der Raumdaten RD, der Belegungsinformation BI und der Helligkeitsinformation HI eine Helligkeitsverteilung D2 im Innenraum mittels des Simulators SIM computergestützt zu simulieren, in Abhängigkeit der simulierten Temperaturverteilung D1 und/oder der Helligkeitsverteilung D2 einen Energieverbrauch EV für den Innenraum mittels der Recheneinheit zu berechnen, und die Platzzuweisung für Personen in mindestens einem Bereich des Innenraums mittels des Optimierers OPT derart zu modifizieren, bis der berechnete Energieverbrauch EV einen vorgegebenen Zielwert unterschreitet.

Insbesondere werden die Simulation und Optimierung für einen vorgegebenen Zeitpunkt und/oder Zeitraum durchgeführt.

Außerdem kann das Optimierungsmodul die Sensordaten SD1 der Temperatursensoren bzw. die Sensordaten SD2 der Helligkeitssensoren bei der Simulation der Temperatur- bzw. Helligkeitsverteilung berücksichtigen.

Das Optimierungsmodul 103 kann bei der Ermittlung der optimierten Platzzuweisung insbesondere folgende Randbedingungen berücksichtigen:
- Abstandsvorgaben für eine Personenbelegung,
   und/oder
- Priorisierung bei einer Belegung von Bereichen des Innenraums.

Die Berechnung des Energieverbrauchs EV ergibt sich aus der ermittelten Temperatur- und/oder Helligkeitsverteilung D1, D2.

Beispielsweise kann anhand der ermittelten Temperaturverteilung D1 berechnet werden, wieviel, z.B. unter Berücksichtigung von externen Wärmequellen (z.B. durch Sonneneinstrahlung) der Innenraum beheizt wird. Daraus lassen sich beispielsweise Energiekosten ableiten.

Außerdem kann eine Heizkörpertemperatur bereits in der Temperaturinformation TI enthalten sein. Beispielsweise kann mittels eines Temperatursensors im Raum eine Heizleistung eines Heizkörpers ermitteln. Alternativ kann anhand einer Thermostateinstellung eine Temperatur des Heizkörpers ermittelt werden. Somit kann der Heizkörper als Wärmequelle bei der Simulation berücksichtigt werden. Es ist auch denkbar, dass die Wärmeleistung eines Heizkörpers als Optimierungsgröße behandelt wird. In diesem Fall kann das Ausgabemodul 103 zusätzlich eine optimierte Heizkörpertemperatur ausgeben, die zum Einstellen des jeweiligen Heizkörpers genutzt werden kann.

Das Optimierungsmodul 102 bestimmt eine optimierte Platzzuweisung für den Innenraum, die einen Energieverbrauch für den Innenraum vorzugsweise minimiert. Dabei wird die Temperaturverteilung D1 und/oder die Helligkeitsverteilung D2 bestimmt, die sich jeweils aus einer Platzzuweisung ergibt. Beispielsweise werden bei einer Temperaturverteilung auch Personen als Wärmequellen berücksichtigt.

Das Optimierungsmodul 102 kann beispielsweise auch eingerichtet sein, in Abhängigkeit der Raumdaten RD und der Belegungsinformation BI eine Raumakustik D3 für den Innenraum computergestützt zu simulieren und die Platzzuweisung für Personen in mindestens einem Bereich des Innenraums derart zu modifizieren, dass die Raumakustik D3 im Innenraum optimiert wird. Dazu kann insbesondere eine mittlere Lautstärke für eine Person angenommen werden.

Vorzugsweise wird die optimierte Platzzuweisung PZopt neu für einen nachfolgenden Zeitraum ermittelt, sobald eine Personenanzahl im Innenraum einen vorgegebenen Grenzwert über- oder unterschreitet. Beispielsweise kann eine erneute Platzzuweisung ermittelt werden, wenn eine bestimmte Anzahl an Personen eine Arbeitsplatzzuweisung anfordert.

Die optimierte Platzzuweisung PZopt wird dem Ausgabemodul 103 übermittelt.

Das Ausgabemodul 103 ist derart eingerichtet, die optimierte Platzzuweisung auszugeben. Beispielsweise ist das Ausgabemodul 103 als ein, im Innenraum installiertes Anzeigesystem zum Anzeigen und/oder Steuern der optimierten Platzzuweisung realisiert. Alternativ kann das Ausgabemodul 103 auch als eine Softwareapplikation für ein mobiles Gerät zum Anzeigen und/oder Steuern der optimierten Platzzuweisung PZopt realisiert sein. Auf diese Weise kann die Platzzuweisung beispielsweise auch individuell an ein jeweiliges mobiles Gerät, wie z.B. ein Smartphone, einer jeweiligen Person übermittelt werden.

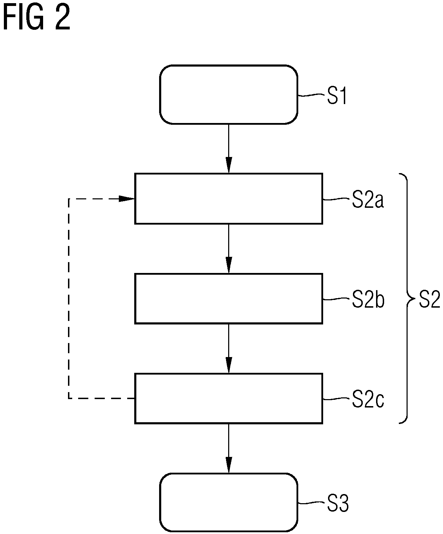

Figur 2 zeigt ein Ausführungsbeispiel eines computerimplementierten Verfahrens zur Ermittlung einer optimierten Platzzuweisung für Personen in Bereichen eines Innenraums. Das Verfahren kann beispielsweise für Büroräume, Zugabteile und/oder Flugzeugsitze angewendet werden.

Das Verfahren umfasst folgende Verfahrensschritte:
Im ersten Schritt S1, werden Raumdaten, die dem Innenraum zugeordnet sind, einer Belegungsinformation einer Personenbelegung in Bereichen des Innenraums, und einer Temperaturinformation und/oder einer Helligkeitsinformation, die jeweils dem Innenraum zugeordnet sind, eingelesen. Beispielsweise werden die Daten von einer Speichereinheit und/oder direkt bereitgestellt von Sensoren eingelesen.

Im nächsten Schritt S2, wird iterativ eine optimierte Platzzuweisung in Bereichen des Innenraums ermittelt, so dass ein Energieverbrauch für den Innenraum optimiert wird. Eine Iteration umfasst insbesondere folgende Teilschritte des Schritt S2:
- in Abhängigkeit der Raumdaten, der Belegungsinformation und der Temperaturinformation eine Temperaturverteilung und/oder in Abhängigkeit der Raumdaten, der Belegungsinformation und der Helligkeitsinformation wird eine Helligkeitsverteilung im Innenraum computergestützt simuliert, Schritt S2a,
- in Abhängigkeit der simulierten Temperatur- und/oder Helligkeitsverteilung wird ein Energieverbrauch für den Innenraum berechnet, Schritt S2b,
   und
- die Platzzuweisung für Personen in mindestens einem Bereich des Innenraums wird modifiziert, Schritt S2c, bis der berechnete Energieverbrauch einen vorgegebenen Zielwert unterschreitet.

Sobald eine Platzzuweisung ermittelt wurde, der ein Energieverbrauchswert zugeordnet ist, der den vorgegebenen Zielwert unterschreitet, wird diese optimierte Platzzuweisung ausgegeben, Schritt S3. Beispielsweise kann die Platzzuweisung als eine Datenstruktur ausgegeben werden. Diese Datenstruktur kann anschließend beispielsweise von einer Steuereinheit zum Steuern einer Platzzuweisung eingelesen und zum Steuern der optimierten Platzzuweisung weiterverarbeitet werden. So kann beispielsweise die Platzzuweisung für Personen automatisiert gesteuert werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Vorrichtung (100) zur Ermittlung einer optimierten Platzzuweisung (PZopt) für Personen in Bereichen eines Innenraums, umfassend:
a) ein Eingabemodul (101), das derart eingerichtet ist, folgende Informationen einzulesen:
- Raumdaten (RD), die dem Innenraum zugeordnet sind,
- eine Belegungsinformation (BI) einer Personenbelegung in Bereichen des Innenraums,
und
- eine Temperaturinformation (TI) und/oder eine Helligkeitsinformation (HI), die jeweils dem Innenraum zugeordnet sind,
b) ein Optimierungsmodul (102), das derart eingerichtet ist, iterativ die optimierte Platzzuweisung (PZopt) in Bereichen des Innenraums derart zu ermitteln, dass ein Energieverbrauch für den Innenraum optimiert wird, wobei iterativ
- in Abhängigkeit der Raumdaten (RD), der Belegungsinformation (BI) und der Temperaturinformation (TI) eine Temperaturverteilung (D1) und/oder in Abhängigkeit der Raumdaten (RD), der Belegungsinformation (BI) und der Helligkeitsinformation (HI) eine Helligkeitsverteilung (D2) im Innenraum computergestützt simuliert wird,
- in Abhängigkeit der simulierten Temperatur- und/oder der Helligkeitsverteilung (D1, D2) ein Energieverbrauch (EV) für den Innenraum berechnet wird,
- die Platzzuweisung für Personen in mindestens einem Bereich des Innenraums derart modifiziert wird, bis der berechnete Energieverbrauch (EV) einen vorgegebenen Zielwert unterschreitet,
und
c) ein Ausgabemodul (103), das derart eingerichtet ist, die optimierte Platzzuweisung (PZopt) für Personen für die Bereiche des Innenraums auszugeben.

2. Vorrichtung (100) nach Anspruch 1, wobei die Raumdaten (RD) mindestens eine der folgenden Informationen umfassen:
- Raumgrößen des Innenraums,
- Grundriss des Innenraums,
- Ortsangaben von Wärmequellen,
- Information zur Raumdämmung des Innenraums,
- Information zu Raumöffnungen des Innenraums,
und/oder
- Ortsinformation des Innenraums.

3. Vorrichtung (100) nach Anspruch 1 oder 2, wobei die Raumdaten (RD) als ein digitales Gebäudemodell des Innenraums vorliegen.

4. Vorrichtung (100) nach einem der vorhergehenden Ansprüche, wobei die Temperaturinformation (TI) mindestens eine der folgenden Informationen umfasst:
- Informationen zu internen und/oder externen Wärmequellen,
- eine Temperaturmodellvorhersage für einen Ort des Innenraums,
und/oder
- Informationen zur Energieaufnahme des Innenraums.

5. Vorrichtung (100) nach Anspruch 1, wobei das Eingabemodul (101) weiter eingerichtet ist, Sensordaten (SD1) von Temperatursensoren des Innenraums einzulesen und wobei das Optimierungsmodul (102) weiter eingerichtet ist, diese Sensordaten bei der computergestützten Simulation der Temperaturverteilung (D1) zu berücksichtigen.

6. Vorrichtung (100) nach Anspruch 1 oder 5, wobei das Eingabemodul (101) weiter eingerichtet ist, Sensordaten (SD2) von Helligkeitssensoren des Innenraums einzulesen und wobei das Optimierungsmodul (102) weiter eingerichtet ist, diese Sensordaten (SD2) bei der computergestützten Simulation der Helligkeitsverteilung (D2) zu berücksichtigen.

7. Vorrichtung (100) nach einem der vorhergehenden Ansprüche, wobei das Optimierungsmodul (102) eingerichtet ist, in Abhängigkeit der Raumdaten (RD) und der Belegungsinformation (BI) eine Raumakustik (D3) für den Innenraum computergestützt zu simulieren und die Platzzuweisung für Personen in mindestens einem Bereich des Innenraums derart zu modifizieren, dass die Raumakustik (D3) im Innenraum optimiert wird.

8. Vorrichtung (100) nach einem der vorhergehenden Ansprüche, wobei das Optimierungsmodul (102) eingerichtet ist, mindestens einer der folgenden Randbedingungen bei der Ermittlung der optimierten Platzzuweisung zu berücksichtigen:
- Abstandsvorgaben für eine Personenbelegung,
und/oder
- Priorisierung bei einer Belegung von Bereichen des Innenraums.

9. Vorrichtung (100) nach einem der vorhergehenden Ansprüche, wobei das Optimierungsmodul (102) eingerichtet ist, die optimierte Platzzuweisung (PZopt) neu zu ermitteln, sobald eine Personenanzahl im Innenraum einen vorgegebenen Grenzwert über- oder unterschreitet.

10. Vorrichtung (100) nach einem der vorhergehenden Ansprüche, wobei das Ausgabemodul (103) als ein, im Innenraum installiertes Anzeigesystem zum Anzeigen der optimierten Platzzuweisung (PZopt) realisiert ist.

11. Vorrichtung (100) nach einem der Ansprüche 1 bis 9, wobei das Ausgabemodul (103) als eine Softwareapplikation für ein mobiles Gerät zum Anzeigen der optimierten Platzzuweisung (PZopt) realisiert ist.

12. Computerimplementiertes Verfahren zur Ermittlung einer optimierten Platzzuweisung für Personen in Bereichen eines Innenraums, mit den Verfahrensschritten:
a) Einlesen von Raumdaten (S1), die dem Innenraum zugeordnet sind, einer Belegungsinformation einer Personenbelegung in Bereichen des Innenraums, und einer Temperaturinformation und/oder einer Helligkeitsinformation, die jeweils dem Innenraum zugeordnet sind, einzulesen,
b) iteratives Ermitteln (S2) der optimierten Platzzuweisung in Bereichen des Innenraums, derart, dass ein Energieverbrauch für den Innenraum optimiert wird, wobei iterativ
- in Abhängigkeit der Raumdaten, der Belegungsinformation und der Temperaturinformation eine Temperaturverteilung und/oder in Abhängigkeit der Raumdaten, der Belegungsinformation und der Helligkeitsinformation eine Helligkeitsverteilung im Innenraum computergestützt simuliert wird (S2a),
- in Abhängigkeit der simulierten Temperatur- und/oder Helligkeitsverteilung ein Energieverbrauch für den Innenraum berechnet wird (S2b),
- die Platzzuweisung für Personen in mindestens einem Bereich des Innenraums derart modifiziert wird (S2c), bis der berechnete Energieverbrauch einen vorgegebenen Zielwert unterschreitet,
und
c) Ausgeben (S3) der optimierten Platzzuweisung für die Bereiche des Innenraums.

13. Computerprogrammprodukt, das direkt in einen programmierbaren Computer ladbar ist, umfassend Programmcodeteile, die dazu geeignet sind, die Schritte des Verfahrens nach Anspruch 12 durchzuführen.
